# EUROPÄISCHE PATENTSCHRIFT

(11) **EP 0 355 580 B1**
(45) Veröffentlichungstag und Bekanntmachung des Hinweises auf die Patenterteilung: **24.02.1993**
(21) Anmeldenummer: 89114698.7
(22) Anmeldetag: 09.08.1989
(51) Int. Cl.: B23P 15/26, F28F 9/00

(54) **Verfahren zur Herstellung einer Abstandshalterung von Profilrohren der Matrix eines Wärmetauschers**
Method of manufacturing a spacer for the profiled pipes of the matrix of a heat exchanger
Procédé de préparation d'écarteur pour des tuyaux profilés de la matrice d'un échangeur de chaleur

(30) Priorität: 16.08.1988 DE 3827679
(43) Veröffentlichungstag der Anmeldung: 28.02.1990
(73) Patentinhaber: MTU MOTOREN- UND TURBINEN-UNION MÜNCHEN GMBH, D-80976 München (DE)
(72) Erfinder: Greune, Christian, D-8080 Fürstenfeldbruck (DE); Maier, Karl, D-8047 Karlsfeld (DE)

(56) Entgegenhaltungen:
- DE-A- 2 907 810
- GB-A- 1 263 228
- GB-A- 1 364 571
- US-A- 3 596 346
- US-A- 3 789 498

## Beschreibung

Die Erfindung bezieht sich auf eine Abstandshalterung nach dem Oberbegriff Patentanspruchs 1.

Aus der DE-A-3329202 ist es bei einem Wärmetauscher der in Rede stehenden Art bekannt, Abstandshalter in der Form sich aneinander abstützender Blechstreifen auf den Profilrohren bzw. Lanzettenprofilen zu befestigen und damit den Abstand im Rohrbündel der Matrix zwischen den einzelnen Lanzettenröhrchen herzustellen. Ein wesentlicher Nachteil dieser festen Abstandshalter besteht darin, daß sie extrem teuer sind. Die hohen Kosten entstehen dadurch, daß pro Lanzett bzw. Profilrohr eine Vielzahl, zumindest acht Abstandsbleche benötigt werden, die zunächst z. B. untereinander mittels Punktschweißung zu verbinden wären und dann, um ein Verschieben auf den Röhrchen zu verhindern, mit dem Rohrprofil verlötet werden müßten. Man sucht daher kostengünstigere Abstandshalter zu verwenden und z. B. Bänder, insbesondere Stahldrahtgebinde, vorzusehen, die zwischen dem Rohrbündel angeordnet werden sollen. Derartige schon verhältnismäßig elastische Abstandshalter sind aus der GB-A-1364571 bekannt und haben unter anderem den Nachteil 6, daß sie besonders befestigt werden müssen, damit sie nicht in Längsrichtung des Rohrbündels sich verschieben. Hinzu kommt die Möglichkeit, daß diese elastischen Abstandshalter auch quer zum Rohr wandern. Auch dieses Wandern ist von Nachteil und soll verhindert werden.

Gesucht wird also eine Befestigung der elastischen Abstandshalter an den einzelnen Röhrchen des Rohrbündels, die so vorgesehen ist, daß eine Bewegung des Abstandshalters senkrecht und in Richtung zum Rohrbündel verhindert wird, daß aber andererseits die Rohre gegeneinander jedoch eine geringe Bewegungsmöglichkeit haben.

Bei Betrieb eines Wärmetauschers der in Rede stehenden und ferner aus der DE-A-2907810 oder der DE-C-3146090 bekannten Art treten insbesondere in Kombination mit einem Gasturbinentriebwerk hochfrequente Schwingungen im Rohrbündel auf. Diese Schwingungen verursachen geringe Bewegungen zwischen den einzelnen Lanzetten oder Profilröhrchen und dem betreffenden Abstandshalter. Genannte Schwingungen können auch z. B. aus Fahrzeugstoßbelastungen resultieren. Durch ein - mit anderen Worten - "hochfrequentes" Scheuern entsteht Verschleiß (fretting) an den dünnwandigen Lanzetten bzw. Profilröhrchen, der die Lebensdauer begrenzt. Dies könnte verhindert werden, wenn gemäß z. B. der DE-A-3329202 bekannten Art die Abstandshalter mit den Lanzetten oder Röhrchen verbunden würden und die Bewegungen der Röhrchen zueinander über entsprechende Elastizität des Abstandshalters aufgenommen würde, was jedoch im zuletzt genannten bekannten Fall praktisch nicht möglich ist.

Ein Befestigen eines aus der GB-A-1364571 bekannten elastischen Abstandshalters an den einzelnen Röhrchen durch Anlöten dürfte praktisch als ausgeschlossen zu gelten haben, da das betreffende Stahldrahtgebinde das Lot aufsaugen und so zu einem starren Körper werden würde und damit die Bewegung der Röhrchen oder Lanzetten verhindert werden würden. Ein Befestigen eines derartigen elastischen Abstandhalters am Rohr durch Schweißen, z. B. Punktschweißen, dürfte insoweit praktisch ausscheiden, da bezüglich der zu verwendenden Profilröhrchen extrem dünne Wandstärken zugrundezulegen sind, so daß die Röhrchen durch einen Punktschweißvorgang beschädigt und damit undicht werden könnten.

Der Erfindung liegt die Aufgabe zugrunde, die praktisch verschleißlose Befestigung einer elastischen Abstandshalterung an den einzelnen Profilröhrchen der Matrix so vorzusehen, daß eine Bewegung senkrecht sowie in Richtung des Rohrbündels verhindert und zugleich eine verhältnismäßig geringe Bewegungsmöglichkeit der Röhrchen relativ zueinander gewährleistet wird.

Die gestellte Aufgabe ist durch den kennzeichnenden Teil des Patentanspruchs 1 erfindungs gemäß gelöst.

Beim Diffusionsvorgang, der insbesondere bei hoher Temperatur im Vakuum vor sich gehen soll, wird immer nur ein Teil der aus Drähten zusammengesetzten Abstandshalterkonfigurationen mit dem betreffenden Profilrohr oberflächenseitig verbunden werden. Damit sind die Röhrchen des Wärmetauschers relativ zueinander beweglich, so daß unterschiedliche Wärmedehnungen der Röhrchen untereinander - insbesondere in den jeweiligen Rohrlängsrichtungen - möglich sind. Auch die dämpfende Wirkung der elastischen Abstandshalterung bleibt erhalten oder wird sogar verbessert, indem die litzenartig verwobenen feinen Drähte für die Abstandshalterungsmittel, z. B. Streifen, Bänder, in der Lage sind, Schwingungen durch innere Reibung zu dämpfen. Darüber hinaus wird der Abstandshalter im Rohrbündel festgelegt und zwar sowohl in Längsrichtung als auch in Querrichtung der Profilrohre. Außerdem ist die angegebene Lösung preisgünstig, da die Befestigung der auf vergleichsweise einfache Weise in das Rohrbündel eingelegten bzw. durch dieses gezogenen Bänder, Litzen, Seile oder Streifen an den Röhrchen durch eine einzige Wärmebehandlung erfolgen kann.

Im Rahmen der Erfindung ist für den Diffusionsvorgang der Werkstoff sowohl der elastischen Abstandshalter als auch derjenige der Röhrchen im Hinblick auf die Temperatur der Wärmebehandlung von besonderer Bedeutung. Im vorliegenden Fall werden für die elastischen Abstandshalter wie auch für die Röhrchen hochwarmfeste Werkstoffe zugrunde gelegt; dabei werden insbesondere für die Abstandshalterungsmittel Werkstoffe auf Nickel- und Kobaltbasis vorgeschlagen, als Werkstoff für die Profilrohre soll vorzugsweise eine hochwarmfeste Nickel-Chrom-haltige Legierung verwendet werden. Gemäß dieser bevorzugten Werkstoffauswahl soll der Diffusionsvorgang bei ca. 1.100 °C unter Vakuum durchgeführt werden.

Bei einem Wärmetauscher nach der angegebenen bekannten Art besteht ferner die Notwendigkeit, im Bogenbereich Abstandshalter unterzubringen, die einerseits die Elemente des Rohrbündels im erforderlichen Abstand halten, zum anderen das Heißgas, das durch das Rohrbündel strömt, so zu lenken, daß ein optimaler Strömungsfluß auch durch den Bogenbereich gewährleistet ist (Erhöhung der Heißgasverweilzeit im Bogenbereich zugunsten eines insgesamt optimalen Wärmetauschprozesses). Hierzu können in vorteilhafter Weiterbildung der Erfindung Abstandshalter nur auf jeweils bestimmten Teilen des Rohrbündels angeordnet sein. Dabei ist es besonders schwierig, diese elastischen Abstandshalter zu positionieren und ein Verrutschen in Längs- und Querrichtung zu verhindern. Hier bieten weitere entsprechende Ausgestaltungen der vorliegenden Erfindung eine einfache und präzise Möglichkeit der Befestigung der Abstandshalter im Bogenbereich.

Vorteilhafte Ausgestaltungen des Grundgedankens der Erfindung gemäß Anspruch 1 finden ihren Niederschlag in den Merkmalen der Erfindung wie sie aus den Patentansprüchen 2 - 7 weiter hervorgeht.

Anhand der Zeichnungen ist die Erfindung beispielsweise weiter erläutert; es zeigen:
- Fig. 1:: ein Prinzipschema eines Profilrohrwärmetauschers in Kreuz-Gegenstrom-Bauweise in seitlicher Ansicht,
- Fig. 2:: die Anordnung eines elastischen Abstandshalters in Form eines endlos durch eine quergeschnitten dargestellte Matrixsektion gezogenen Bandes,
- Fig. 3:: einen vergrößert wiedergegebenen Profilfeldausschnitt aus Figur 2 unter Verdeutlichung der sich örtlich ausbildenden Diffusionszone,
- Fig. 4:: ein den Bogen- oder Umlenkbereich verdeutlichenden Matrixausschnitt unter Veranschaulichung insbesondere sektionsweise unterschiedlich ausgebildeter und angeordneter Abstandshalter und

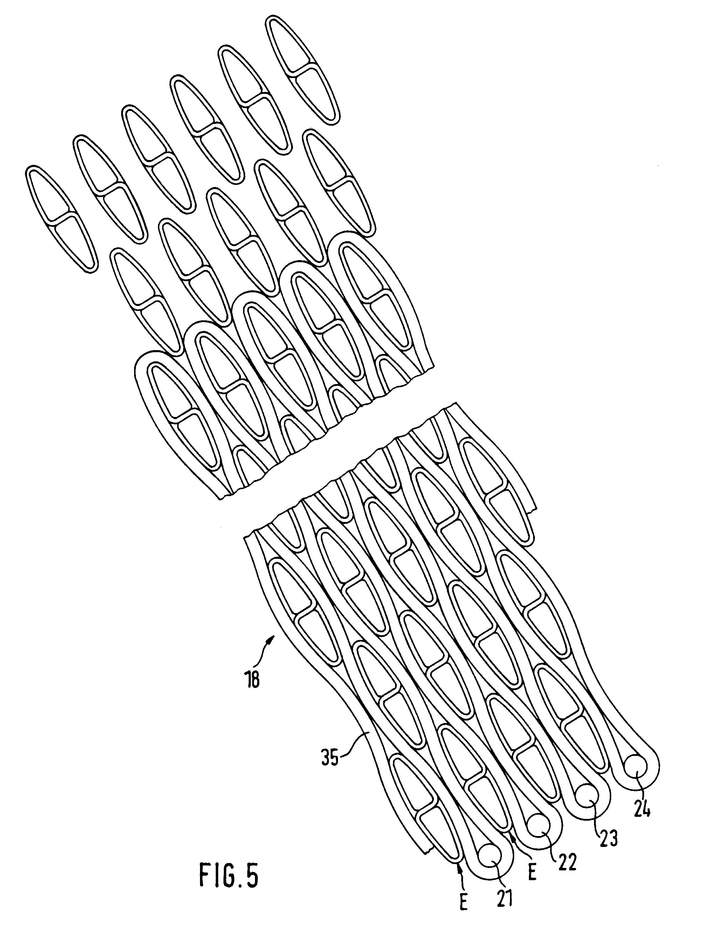

- Fig. 5:: einen Profilfeldausschnitt der Matrix gemäß A-A der Fig. 4 unter Verdeutlichung besonderer äußerer Halterungsmittel für das beispielhaft gewählte einstückige Abstandshalterungsband.

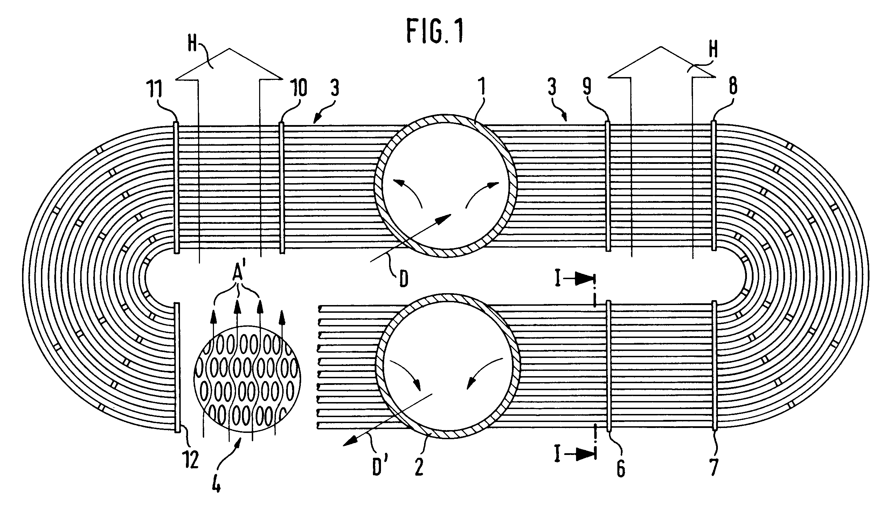

Fig. 1 veranschaulicht einen schematisch dargestellten, zur Anwendung der erfindungsgemäßen Abstandshalterung und der zugehörigen Wärmetauscherkriterien geeigneten Profilrohrwärmetauscher in Kreuz-Gegenstrom-Bauweise. Der Profilrohrwärmetauscher besteht im wesentlichen aus zwei parallel zueinander angeordneten Sammelrohren 1, 2. Von diesen beiden Sammelrohren 1, 2 kragt eine U-förmig umgebogene Profilrohrmatrix 3 gegen eine Heißgasströmung H aus. Die Profilrohrmatrix besteht aus einzelnen Profilröhrchen mit elliptischem Querschnitt, wie dies aus Fig. 1, unten links im Schnitt, ohne weiteres ersichtlich ist. Aus dem Schnittbild ist ferner ersichtlich, daß sich die erwähnte Heißgasströmung H im wesentlichen schlangenlinienförmig durch die vorgegebenen Heißgasdurchströmquerschnitte der Matrix hindurchwindet. Dabei sind also die einzelnen Profilrohre 4 hochkant in Bezug auf die betreffende Heißgasströmung H angeordnet. Im Betrieb wird also dem hier oberen Sammelrohr 1 Druckluft D zugeführt, die dann seitlich in die zunächst geradschenkeligen Abschnitte der Matrix einströmt; im äußernen Umlenk- oder Bogenbereich der Matrix wird dann die Druckluftströmung umgelenkt und gelangt über die betreffenden unteren geradschenkeligen Abschnitte der Matrix 3 in das untere Sammelrohr 2, aus dem sie im aufgeheizten Zustand gemäß Pfeil D′ einem geeigneten Verbraucher, z. B. der Brennkammer eines Gasturbinentriebwerkes, zugeführt werden kann. Mit 5 ÷ 12 sind in Fig. 1 geeignete Abstandhalter der Profilrohre 4 beispielhaft schematisch dargestellt.

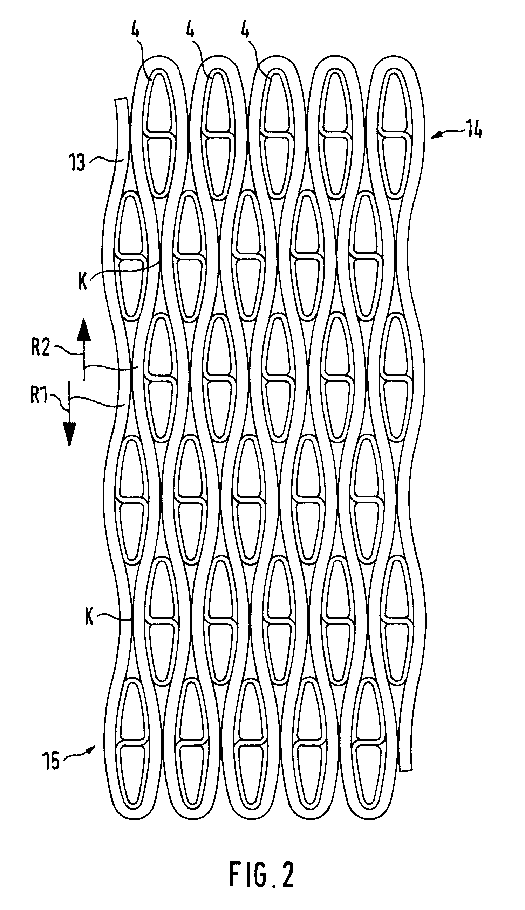

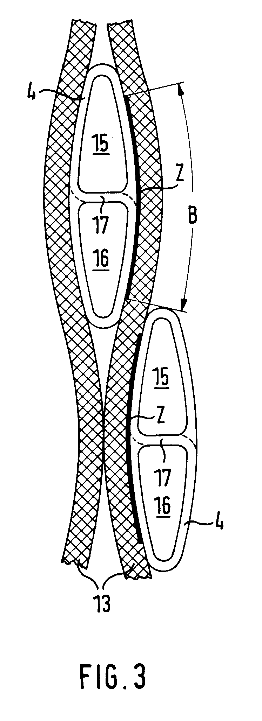

Gemäß dem Grundgedanken der Erfindung können also die in Fig. 1 beispielhaft genannten Abstandshalter 6 ÷ 12 erfindungsgemäß hergestellt werden; im Hinblick auf den Profilfeldausschnitt nach Fig. 2, also etwa der Schnittdarstellung nach Figur 1 - unten links - entsprechend (geradschenkeliger Bereich der U-förmigen Profilrohre 4), besteht der Abstandshalter hier aus einem aus litzenartig verwobenen Feindrähten gefertigten Band 13, welches zwischen benachbarten Profilrohrreihen unter wechselnder Rohrumschmiegung angeordnet bzw. hindurchgezogen wird; im Wege einer auf die beteiligten Werkstoffpartner abgestimmten Temperaturbehandlung soll dann das aus Feindrähten zusammengesetzte Band 13 durch örtliche Oberflächendiffusion (Diffusionszonen Z - Fig. 3) mit betreffenden Gegenflächen der Profilrohre 4 verbunden werden. B markiert die Flächenbreite der Zonen Z. Anstelle des genannten Bandes 14 kann ein Streifen, ein Seil bzw. eine seilartig verwobene Feindrahtstruktur als elastisches Abstandshalterungsmittel verwendet werden.

In Ausgestaltung des Verfahrens kann der Diffusionsvorgang zwecks örtlicher Oberflächenverschweißung und Verbindens der Seile. Bänder, Streifen oder dergleichen mit daran angrenzenden Oberflächen der Profilrohre 4 in einem Ofen unter Vakuum erfolgen; abweichend wäre auch ein Diffusionsvorgang vorstellbar, der unter Bereitstellung einer den Diffusionsprozeß unterstützenden Schutzgasatmosphäre durchgeführt wird (Argon als Schutzgas).

Für den Diffusionsprozeß wäre selbstverständlich auf die gegenseitige Werkstoffqualität und -verträglichkeit auch hinsichtlich der zu verwendenden Temperaturen zu achten.

Gemäß einem vorteilhaften Ausführungsbeispiel der Erfindung können z. B. das aus litzenartig verwobenen Feindrähten (gegebenenfalls Mikrostruktur) bestehende Band 13 (Fig. 2) aus einer hochwarmfesten Legierung auf Nickel-Kobalt-Basis gefertigt, die Profilrohre 4 aus einer hochtemperaturfesten Nickel-Chrom-haltigen Legierung gefertigt sein.

Anstelle des Ausführungsbeispiels nach Fig. 2 besteht durchaus die Möglichkeit, Seile, Streifen, Bänder oder dergleichen - jeweils aus litzenartig verwobenen Fein- oder Feinstdrähten bestehend - als Einzelteile zu verwenden, unter Ausnutzung einer von außen anderweitig auf die Matrix einwirkenden Klemmeinrichtung, bzw. unter Zugrundelegung einer vorgegebenen festen Rohrabstandsdichte, die z. B. aus dem unmittelbaren fluiddichten und festen Rohranschluß an ein Verteiler- oder Sammelrohr 1 bzw. 2 (Figur 1) vorgegeben ist.

In genauerer Interpretation der Erfindung (Fig. 2) ist dort das Band 13, von oben innen nach unten außen gesehen, unter wechselseitiger Rohrumschmiegung zickzackförmig durch das Rohrbündel geführt bzw. gezogen.

Weiter ergibt sich aus Fig. 2, daß das Band 13 - von oben innen nach unten außen gesehen - unter kontinuierlicher Änderung seines Richtungsverlaufes (Pfeile R1/R2) jeweils um die Reihen 14, 15 der am weitesten außen liegenden Profilrohre 4 der Matrix herumgeführt ist. Aus Fig. 2 erkennt man ferner, daß der angegebene Bandrichungsverlauf zu sich abwechselnd wiederholenden, gegenseitigen Flächenkontaktierungen betreffender Bandabschnitte an den Stellen K führt.

Fig. 3 veranschaulicht ferner, daß jedes elliptische Profilrohr 4 zwei im wesentliche halbelliptische Innenkanäle 15, 16 für die Druckluftführung aufweist, die durch einen Quersteg 17 voneinander getrennt sind.

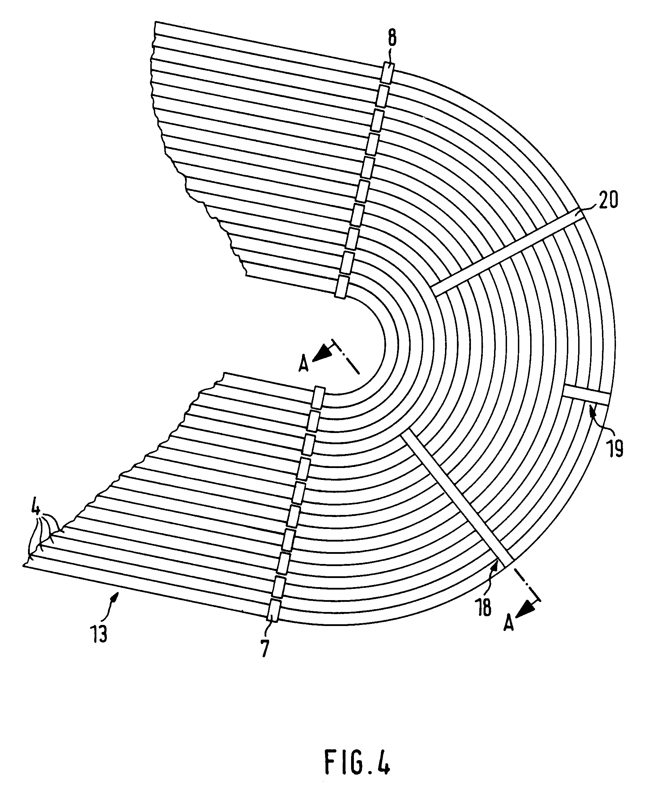

Fig. 4 gibt Aufschluß über hier z. B. bandartige Abstandshalter 18, 19, 20 im Bogenbereich der Matrix 13, die gemäß dem Verfahren, bzw. in Kombination mit einem Wärmetauschergrundkonzept nach Fig. 1, in unterschiedlicher Längenerstreckung sowie hier, z. B. in gleichförmiger Sektionsverteilung auf den Bogenbereich, in Bezug auf eine dort vorgegebene Profilrohrabstandsdichte, räumlich versetzt sind. Diese Anordnung erhöht die Heißgasverweilzeit im Bogenbereich zugunsten wiederum einer im wesentlichen gleichförmigen Heißgasmassenstromverteilung über bzw. auf die Gesamtmatrix.

Es liegt nämlich bei Wärmetauscherkonzepten im Rahmen der Fig. 1 im wesentlichen nur in den betreffenden geradschenkeligen Abschnitten der aus U-förmigen Profilrohren 4 bestehenden Matrix 13 ein regulär durchströmtes Rohrfeld mit gleichförmig zwischen den Rohren ausgebildeten Durchströmquerschnitten vor; im Bogenbereich - insbesondere im äußeren Randbereich - ergibt sich eine örtlich verringerte Profilrohrabstandsdichte, die teilweise zu irregulären Strömungsverhältnissen führt; mit anderen Worten hat die Heißgasströmung die Tendenz, sich den Weg des geringsten Widerstandes, hier also vorzugsweise in Richtung auf die äußeren Rohrbögen zu suchen, und zwar zu Lasten des regulär durchströmten Profilrohrfeldbereiches (geradlinige Matrixschenkel). Die Erfindung schafft so einen Ausgleich der Strömungsverhältnisse im Sinne einer homogeneren Gesamtverteilung der Masse der Heißgase auf die Matrix zugunsten eines wiederum optimalen Wärmeaustauschgrades im Hinblick auf den kritischen Bogenbereich.

Gemäß Schnitt A-A der Fig. 4 verkörpert eine vorteilhafte Weiterbildung der Erfindung, bei der am äußeren Umfang des Bogenbereiches der Matrix 13 der Bogenkontur folgende Halteseile oder Haltedrähte 21, 22, 23, 24 vorgesehen werden; die Drähte sollen hierbei in an jeweils zwei benachbarte äußere Profilrohrenden E angrenzenden Positionen angeordnet werden bzw. zu liegen kommen; um betreffende Haltedrähte 21 ÷ 24 kann dann ein z. B. für die gesamte Abstandshalterung gewählter einstückiger Streifen 25, wiederum aus litzenartigen Feindrähten verwoben hergestellt, im Sinne aufeinanderfolgender wechselseitiger Profilrohrumschließungen gezogen werden.

## Patentansprüche

1. Abstandshalterung (6-12) für eine Profilrohrmatrix (3) eines zur Führung von Gasen stark unterschiedlicher Temperaturen ausgebildeten Wärmetauschers, bei dem die mit elliptischem Querschnitt ausgestatteten, hochkant von Heißgas umströmten Profilrohre (4) in gleichmäßig zueinander versetzter Anordnung ineinandergreifen und in einer zugewiesenen Querebene der Profilrohrmatrix (3) an Abstandskörpern angeordnet sind, die die Profilrohre (4) örtlich jeweils halbseitig umschmiegen, dadurch gekennzeichnet,
- daß die Abstandskörper aus litzenartig verwobenen Feindrähten bestehende Seile, Streifen oder Bänder (13) sind, die jeweils längs, zwischen benachbarten, hochkant angestellten Profilrohren (4), in fortlaufend seitlich wechselnder Rohrumschmiegung so angeordnet sind, daß sie jeweils zwischen zwei die Profilrohre (4) umschmiegenden Abschnitten unter gegenseitiger Flächenkontaktierung (K) zusammengeführt sind,
- daß die Abstandskörper und die Profilrohre (4) entlang Zonen (Z) gegenseitiger Oberflächenberührung durch Diffusionsschweißen miteinander verbunden sind, wobei die Profilrohre (4) und die Abstandskörper aus hochtemperaturfesten metallischen Werkstoffen bestehen.

2. Abstandshalterung nach Anspruch 1, dadurch gekennzeichnet, daß sie von jeweils abschnittsweise zwischen benachbarten Reihen von Profilrohren unter - oder verteilten Seilen, Streifen oder Bändern gebildet ist.

3. Abstandshalterung nach Anspruch 1 oder 2, dadurch gekennzeichnet, daß die Seile, Streifen oder Bänder (13) aus einem Stück gefertigt bzw. endlos in einer gewählten Querebene für die Abstandshalterung durch ein Profilrohrbündel gezogen sind.

4. Abstandshalterung nach Anspruch 3, dadurch gekennzeichnet, daß die Seile, Streifen oder Bänder (13) unter örtlich fortlaufend seitlich wechselnder Rohrumschmiegung zickzackförmig durch ein Rohrbündel geführt bzw. gezogen sind.

5. Abstandshalterung nach Anspruch 3 oder 4, dadurch gekennzeichnet, daß die Seile, Streifen oder Bänder (13) unter kontinuierlicher Änderung ihres Richtunsverlaufs jeweils um Reihen (14,15) der am weitesten außen liegenden Profilrohre (4) der Matrix (3) herumgeführt sind.

6. Abstandshalterung nach den Ansprüche 1 bis 5, in mehrfacher räumlich zueinander versetzter Anordnung bei einem Profilrohrwärmetauscher in Kreuz-Gegenstrom-Bauweise, der mindestens zwei im wesentlichen parallel zueinander verlaufende Sammel- der Verteilerrohre (1,2) zwecks Druckluftzufuhr in die Matrix (3) bzw. -abfuhr aus der Matrix (3) aufweist, die quer gegen eine Heißgasströmung (H) auskragt und aus U-förmigen Profilrohren (4) mit geweils geradschenkeligen, in einen Bogenbereich der Matrix (3) auslaufenden Sektionen zusammengesetzt ist, dadurch gekennzeichnet, daß die aus den Seilen, Streifen oder Bändern bestehende Abstandshalterungen (18,19,20) im Bogenbereich der Matrix (3) in unterschiedlicher Längenerstreckung sowie räumlich zueinander winkelversetzt angeordnet sind, und daß am äußeren Umfang des Bogenbereichs der Matrix (3) der Bogenkontur folgende, in an jeweils zwei benachbarte äußerste Profilrohrenden (E) angrenzenden Positionen Halteseile oder -drähte (21,22,23,24) angeordnet sind, um welche ein für die jeweilige Abstandshalterung (18) einstükkiges Seil, Band oder ein einstückiger Streifen (25) im Sinne der fortlaufend seitlich wechselnden Profilrohrumschmiegung gezogen ist.

7. Abstandshalterung nach Anspruch 1, dadurch gekennzeichnet, daß der hochtemperaturfeste metallische Werkstoff, für die Seile, Streifen oder Bänder der Abstandskörper eine Nickel-Kobalt-Basis-Legierung und derjenige für die Profilrohre (4) eine Nickel-Chrom-haltige Legierung ist.

## Claims

1. Distance retainer (6-12) for a profiled pipe matrix (3) of a heat exchanger for guiding gasses of widely differing temperatures, in the case of which the profiled pipes (4) which are provided with an elliptical cross-section and around the edges of which heating gas flows are arranged such that they are uniformly offset with respect to one another and are disposed in an appropriate horizontal plane of the profiled pipe matrix (3) on spacer elements, which locally surround the profiled pipes (4) on one side in each case, characterised in that:
- the spacer elements are cables, strips or bands (13) consisting of fine wires woven in a strand-like manner, which are, in each case, arranged longitudinally, between adjacent profiled pipes (4) which are set on edge so that the pipes continuously wrap laterally and alternately around one another in such a way that they are, in each case, guided together between two sections surrounding the profiled pipes (4) and with mutual surface contact (K):
- the spacer elements and the profiled pipes (4) are connected to one another along zones (Z) of mutual surface contact by means of diffusion welding, wherein the profiled pipes (4) and the spacer elements consist of metallic materials that are resistant to high temperatures.

2. Distance retainers according to Claim 1, characterised in that they consist of cables, strips or bands distributed or divided in each case in sections between adjacent rows of profiled pipes.

3. Distance retainers according to Claim 1 or 2, characterised in that the cables, strips or bands (13) are manufactured from one piece, or are drawn in an endless manner in a selected horizontal plane for the distance retainers.

4. Distance retainers according to Claim 3, characterised in that the cables, strips or bands (13) are drawn or guided in a zig-zag manner through a pipe bundle, and the pipes surround each other locally and continuously at the sides in an alternating manner.

5. Distance retainers according to Claim 3 or 4, characterised in that the cables, strips or bands (13) are guided in each case around rows (14, 15) of the profiled pipes (4) located furthest outwards of the matrix (3), and continuously changing direction.

6. Distance retainers according to Claims 1 to 5, arranged such that they are offset in relation to one another several times, in the case of a profiled pipe heat exchanger in a cross-counterflow construction, which has at least two substantially parallel collector or distributer pipes (1,2) for supplying compressed air into the matrix (3) or removing it from the matrix (3), which projects transversely towards a flow of heating gas (H) and is comprised of U-shaped profiled pipes (4) having sections in each case with straight legs and terminating in a curved area of the matrix (3), characterised in that the distance retainers (18,19,20) consisting of the cables, strips or bands are arranged in the curved area of the matrix (3) in a variety of lengths and are angularly offset relative to one another; and in that retaining cables or wires (21,22,23,24) are arranged on the external periphery of the curved area of the matrix (3), following the curved contour, in each case abutting two adjacent outermost profiled pipe ends (E), about which retaining cable or wire, for each distance retainer (18), an integral rope or band or an integral strip (25) is drawn in the direction of the profiled pipe surrounding arrangement, which continuously changes sides.

7. Distance retainers according to Claim 1, characterised in that the metallic material which is resistant to high temperatures is a nickel-cobalt based alloy for the cables, strips or bands of the spacer elements and a nickel and chromium-containing alloy for the profiled pipes (4).

## Revendications

1. Ecarteur (6-12) pour une matrice de tubes profilés (3) d'un échangeur de chaleur conçu pour le passage de gaz à des températures fortement différentes, dans lequel les tubes profilés (4) équipés de sections transversales elliptiques, balayés à chant par les gaz chauds, notamment en prise les uns dans les autres selon une disposition régulièrement décalée et sont disposés sur des corps d'écartement dans un plan transversal de la matrice de tubes profilés (3), corps d'écartement qui entourent sur un demi-côté localement les tubes profilés (4), écarteur caractérisé en ce que :
- les corps d'écartement sont constitués par des câbles, des bandes ou des rubans (13) consistant en fils fins entrelacés à la manière d'une tresse, qui sont disposés en entourant de façon continue latéralement les tubes de façon alternative de telle façon qu'ils sont rassemblés respectivement entre deux sections entourant les tubes profilés (4) en venant en contact superficiel réciproque (K)
- les corps d'écartement et les tubes profilés (4) sont reliés ensemble par soudage, par diffusion le long des zones (Z) de contacts superficiels réciproques, les tubes profilés (4) et les corps d'écartement étant réalisés en des matières métalliques résistant aux hautes températures.

2. Ecarteur selon la revendication 1,
caractérisé en ce qu'il est formé respectivement par des câbles, des rubans ou des bandes subdivisés ou réparties par section entre des séries voisines de tubes profiles.

3. Ecarteur selon la revendication 1 ou 2,
caractérisé en ce que les câbles, rubans ou bandes (13) sont fabriqués en une seule pièce ou sont déployés sans fin dans un plan transversal choisi pour l'écarteur à travers un faisceau de tubes profilés.

4. Ecarteur selon la revendication 3,
caractérisé en ce que le côté, le ruban ou la bande (13) sont menés ou sont déployés à travers un faisceau de tubes en forme de zigzag en enveloppant les tubes localement de façon continue latéralement alternative.

5. Ecarteur selon la revendication 3 ou 4,
caractérisé en ce que les côtés, les rubans ou les bandes (13) en modifiant continuellement leur parcours sont enroulés respectivement autour de séries (14, 15) des tubes profilés (4) de la matrice (3) se trouant le plus à l'extérieur.

6. Ecarteur selon les revendications 1 à 5,
dans une disposition à décalage multiple dans l'espace dans le cas d'un échangeur de chaleur à tubes profilés selon une construction à courants inversés, qui présente au moins deux collecteurs ou distributeurs (1, 2) aux fins d'amenée d'air sous pression dans la matrice (3) ou d'évacuation à partir de la matrice (3), s'étendant de façon sensiblement parallèle l'un par rapport à l'autre, qui fait saillie en travers d'un écoulement de gaz chauds (H) et est composé de tubes profilés (4) en forme d'U avec des sections s'étendant dans une zone en forme d'arc de la matrice (3), branchées respectivement en ligne droite, écarteur caractérisé en ce que les écarteurs (18, 19, 20) consistent en câbles, rubans ou bandes sont disposés avec des étendues longitudinales différentes et sont en même temps décalés angulairement les uns par rapport aux autres dans l'espace et en ce que sur le pourtour extérieur de la zone en forme d'arc de la matrice (3) sont disposés des câbles ou des fils d'arrêt (21, 22, 23, 24) suivant le contour de l'arc, dans des positions adjacentes respectivement à deux extrémités (E) de tubes profilés voisins les plus à l'extérieur, autour desquels un câble, une bande ou un ruban monobloc (25) pour l'écarteur (18) correspondant est déployé en entourant les tubes profilés de façon continue alternant latéralement.

7. Ecarteur selon la revendication 1,
caractérisé en ce que la matière métallique résistant aux hautes températures pour les câbles, rubans ou bandes du corps d'écartement est un alliage à base de nickel et de cobalt et celle pour les tubes profilés (4) est un alliage contenant du nickel et du chrome.
